# EUROPÄISCHE PATENTSCHRIFT

(11) **EP 2 834 112 B1**
(45) Veröffentlichungstag und Bekanntmachung des Hinweises auf die Patenterteilung: **14.09.2016**
(21) Anmeldenummer: 13713812.9
(22) Anmeldetag: 22.03.2013
(51) Int. Cl.: B60T 8/36, F16K 27/00, F16K 31/06

(54) **ELEKTROMAGNETVENTIL, INSBESONDERE FÜR SCHLUPFGEREGELTE KRAFTFAHRZEUGBREMSANLAGEN**
ELECTROMAGNETICALLY ACTUATED VALVE, FOR USE IN FOR EXAMPLE VEHICLES WITH A.B.S.
SOUPAPE ELECTROMAGNETIQUE, PAR EXEMPLE POUR VOITURES AVEC A.B.S.

(30) Priorität: 04.04.2012 DE 102012205503
(43) Veröffentlichungstag der Anmeldung: 11.02.2015
(73) Patentinhaber: Continental Teves AG&Co. Ohg, 60488 Frankfurt (DE)
(72) Erfinder: VOSS, Christoph, 60435 Frankfurt am Main (DE); COURTH, Christian, 60439 Frankfurt am Main (DE)
(86) Internationale Anmeldenummer: PCT/EP2013/056020
(87) Internationale Veröffentlichungsnummer: WO 2013/149851

(56) Entgegenhaltungen:
- WO-A1-93/15941
- WO-A1-03/093083
- DE-A1-102006 019 464
- DE-A1-102008 013 271

## Beschreibung

Die Erfindung betrifft ein Elektromagnetventil, insbesondere für schlupfgeregelte Kraftfahrzeugbremsanlagen, nach dem Oberbegriff des Patentanspruchs 1.

Aus der WO 03/093083 A1 ist bereits ein Elektromagnetventil der angegebenen Art bekannt geworden, dessen Magnetanker zur Aufnahme eines Ventilstößels von einer Bohrung durchdrungen ist. Auf dem Ventilstößel stützt sich eine Rückstellfeder ab, wobei zur Einstellung der Federvorspannkraft der Ventilstößel im Magnetanker verschoben wird.

Weiterhin offenbart die DE 10 2008 013271 A1 eine für ein Hydraulikventil geeignete Justiervorrichtung, mit einem mit einer Bohrung versehenen Gehäuseteil und mit einem in der Bohrung mittels eines Gewindes verstellbar gehaltenen Justierglied, das abschnittsweise mit einem Abschnitt der Bohrung eine Presspassung eingeht, um eine einjustierte Position des Justiergliedes zuverlässig beizubehalten.

Nunmehr ist es die Aufgabe der vorliegenden Erfindung, ein Elektromagnetventil der angegebenen Art mit möglichst einfachen, funktionsgerechten Mitteln kostengünstig auszuführen und derart zu verbessern, dass eine einfache, präzise Einstellung des zwischen dem Magnetanker und dem Magnetkern vorgesehenen Restluftspalts.möglich ist.

Diese Aufgabe wird erfindungsgemäß für das Elektromagnetventil der angegebenen Art durch die kennzeichnenden Merkmale des Patentanspruchs 1 gelöst.

Weitere Merkmale und Vorteile der Erfindung gehen aus der nachfolgenden Beschreibung mehrerer Ausführungsbeispiele anhand der Figuren 1 bis 4 hervor.

Es zeigen:
- Figur 1: ein erstes Ausführungsbeispiel der Erfindung anhand eines Längsschnitts durch ein Elektromagnetventil, dessen Einstellhülse einen Bund zur verbesserten Zentrierung der Magnetankerbaugruppe innerhalb des Ventilgehäuses aufweist,
- Figur 2: ein zweites Ausführungsbeispiel der Erfindung anhand eines Längsschnitts durch ein Elektromagnetventil, dessen Einstellhülse einen Bund aufweist, der bei elektromagnetischer Erregung des Magnetankers vollflächig und damit verschleißfrei am Magnetkern anliegt,
- Figur 3: ein drittes Ausführungsbeispiel der Erfindung anhand eines Längsschnitts durch ein Elektromagnetventil, dessen Ventilstößel mittels einer Zentrierscheibe in Richtung auf den Ventilsitz geführt ist,
- Figur 4: ein viertes Ausführungsbeispiel der Erfindung anhand eines Längsschnitts durch ein Elektromagnetventil, dessen Magnetanker einen verlängerten Führungsabschnitt aufweist, der sich in ein topfförmig geschlossenes Ventilgehäuseunterteil erstreckt.

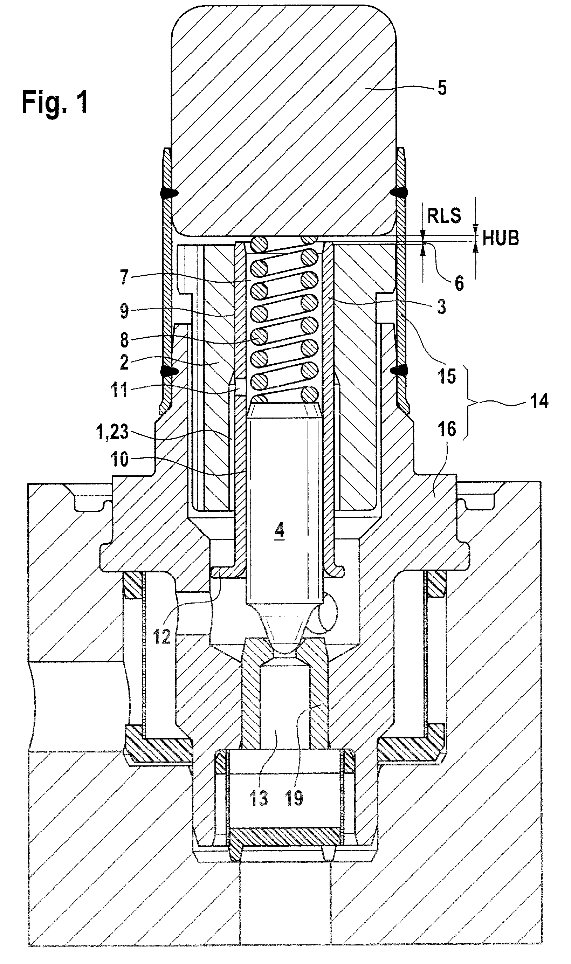

Nachfolgend sollen zunächst die Gemeinsamkeiten aller in den Figuren 1 bis 4 abgebildeten Elektromagnetventile erläutert werden, die bevorzugt für schlupfgeregelte Kraftfahrzeug-Bremsanlagen verwendet werden. Die gezeigten Elektromagnetventile bestehen aus an sich bekannten Funktionselementen. Dazu gehört jeweils ein in einem Ventilgehäuse 14 angeordnete Ventildurchlass 13, der mittels eines an einem Magnetanker 2 angeordneten Ventilstößels 4 unter der Wirkung einer Rückstellfeder 8 verschlossen oder mittels einer nicht abgebildeten Magnetspule geöffnet werden kann. Hierzu ist der Magnetanker 2 abschnittsweise entlang seiner Mantelfläche über einen definierten Arbeitshub axial beweglich im Ventilgehäuse 14 geführt, wobei sich die Rückstellfeder 8 mit ihrem vom Magnetanker 3 abgewandten Federende an einem das Ventilgehäuse 14 verschließenden Magnetkern 5 abstützt. In den vorliegenden vier Ausführungsbeispielen ist der Magnetkern 5 jeweils als Verschlussstopfen in einer austenitischen Gehäusehülse 15 eingepresst, die als Bestandteil des Ventilgehäuses 14 mit einem dickwandigen, steifen Rohrkörper 16 verschweißt ist, der die sichere Befestigung in einer Ventilaufnahmebohrung eines Ventilaufnahmekörpers gewährleistet.

Alle abgebildeten Elektromagnetventile sind in der elektromagnetisch nicht erregten Stellung geschlossen, wozu sich jeweils die oberhalb des Magnetankers 2 angeordnete Rückstellfeder 8 unmittelbar auf dem Ventilstößel 4 abstützt, der abschnittsweise innerhalb einer koaxialen Bohrung 1 des Magnetankers 2 aufgenommen ist. Mittels einer geeigneten elektronischen Analogregelung lässt sich jeweils die auf das Ventilgehäuse 14 aufzusteckende Ventilspule stromproportional ansteuern, womit die Voraussetzung für eine stufenlose Regelung des Ventildurchsatzes gegeben ist.

Um eine präzise Einjustierung der in den Figuren 1 bis 4 abgebildeten Elektromagnetventile zu gewährleisten, ist jeweils in der Bohrung 1 des Magnetankers 2 eine Einstellhülse 3 fixiert, in welcher der Ventilstößel 4 abschnittsweise befestigt ist. Durch die Einstellhülse 3 ist eine besonders einfache, stufenlose Einstellung des Restluftspalts RLS gewährleistet.

Um unerwünschte magnetische Streuflüsse als auch das sogenannte magnetische Kleben des Magnetankers 2 am Magnetkern 5 zu verhindern, ist die Einstellhülse 3 aus einem den Magnetfluss nicht leitenden Werkstoff, insbesondere einem austentischen Stahl hergestellt.

Wie aus allen Figuren hervor geht, weist die Einstellhülse 3 an der dem Magnetkern 5 zugewandten Stirnfläche des Magnetankers 2 einen Überstand 6 auf, dessen axiale Erstreckung dem bei elektromagnetischer Erregung präzise einzuhaltenden Restluftspalt RLS zwischen dem Magnetanker 2 und dem Magnetkern 5 entspricht. Hierzu ist die Einstellhülse 3 abschnittsweise mittels einer Schiebepresspassung in der Bohrung 1 des Magnetankers 2 beliebig einstellbar.

Auf gleiche Befestigungsweise ist der Ventilstößel 4 in der Einstellhülse 3 fixiert, wobei die Einpresstiefe des Ventilstößels 4 in der Einstellhülse 3 durch einen in der Einstellhülse 3 erforderlichen Einbauraum 7 für die Rückstellfeder 8 definiert ist.

Sowohl die zwischen der Einstellhülse 3 und dem Magnetanker 2 als auch die zwischen der Einstellhülse 3 und dem Ventilstößel 4 wirksame Reibkraft der Schiebepresspassung ist vom Betrag her mindestens so groß wie die beim Ventilschalten auf die Einstellhülse 3 und den Ventilstößel 4 einwirkenden mechanischen und hydraulischen Kräfte. In diesem Zusammenhang weist die Einstellhülse 3 zwei Halteabschnitte 9, 10 auf, wovon der erste Halteabschnitt 9 die Pressverbindung zwischen dem Außenmantel der Einstellhülse 3 und der Bohrung 1 umfasst, während der zweite Halteabschnitt 10 durch die Pressverbindung zwischen dem Innenmantel der Einstellhülse 3 und dem Ventilstößel 4 definiert ist.

Ferner geht aus sämtlichen Figuren hervor, dass im Anschluss an den ersten Halteabschnitt 9 im Bereich des zweiten Halteabschnitts 10 ein Ringraum 23 zwischen der Einstellhülse 3 und der Bohrung 1 im Magnetanker 2 vorgesehen ist, sodass eine im Übergangsbereich zwischen dem ersten und zweiten Halteabschnitt 10 in der Einstellhülse 3 angeordnete Druckausgleichsbohrung 11 über den Ringraum 23 mit einem die Rückstellfeder 8 in der Einstellhülse 3 aufnehmenden Einbauraum 7 in hydraulisch druckausgleichender Verbindung steht. Weiterhin erlaubt der Ringraum 23 eine toleranzausgleichende radiale Aufweitung des zweiten Halteabschnitts 10, wodurch das Einpressen des Ventilstößels 4 in die Einstellhülse 3 begünstigt wird.

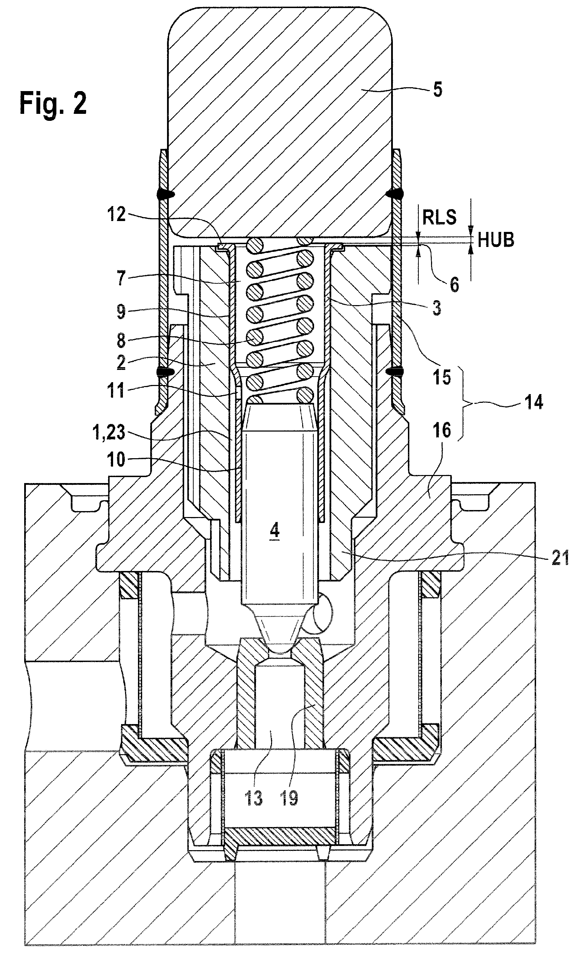

Weiterhin geht aus den Figuren 1 bis 4 hervor, dass die Einstellhülse 3 zumindest an einem Hülsenende mit einem Bund 12 versehen ist, der gemäß den Figuren 2 bis 4 entweder als Axialanschlag am Magnetkern 5 oder nach der Figur 1 als Anker- sowie Stößelzentrierhilfe an der Innenwand des Ventilgehäuses 14 abschnittsweise anliegt, wozu die Einstellhülse 3 unterhalb des Magnetankers 2 mit dem Bund 12 hervor steht. Der Bund 12 hat über den Umfang verteilt mehrere Aussparungen, die einen ungehinderten Ausgleich des zwischen dem unter- und oberhalb des Bunds 12 im Ventilgehäuse 14 befindlichen Flüssigkeitsvolumens ermöglichen.

Durch die nicht magnetischen Eigenschaften der Einstellhülse 3 und des daran angebrachten Bunds 12 ergibt sich nach der Figur 1 vorteilhaft eine nicht magnetische und damit reibungsminimierte Führung für den Ventilstößel 4 und den Magnetanker 2 im Ventilgehäuse 14. Da der Ventilstößel 4 unmittelbar in die nicht magnetische Einstellhülse 3 eingepresst ist, besteht folglich kein Kontakt zum magnetischen Werkstoff des Magnetankers 2, womit im Sinne einer magnetischen Entkoppelung der Ventilstößel 4 unabhängig vom gewählten Werkstoff keiner unerwünschten Magnetisierung ausgesetzt ist, welche die Ventilregelung nachteilig beeinflussen könnte.

Einzelne Unterschiede zwischen den in den Figuren 1 bis 4 gezeigten Ausführungsbeispielen sollen nachfolgend erläutert werden.

Wie bereits eingangs kurz erwähnt wurde, zeigt die Figur 1 eine Verlängerung der Einstellhülse 3 unterhalb des Magnetankers 2, um über den am Ende der Verlängerung ausgebildeten Bund 12 eine präzise Führung des Magnetankers 2 mit dem Ventilstößel 4 in Richtung auf den Ventilsitz 19 im Ventilgehäuse 14 zu gewährleisten.

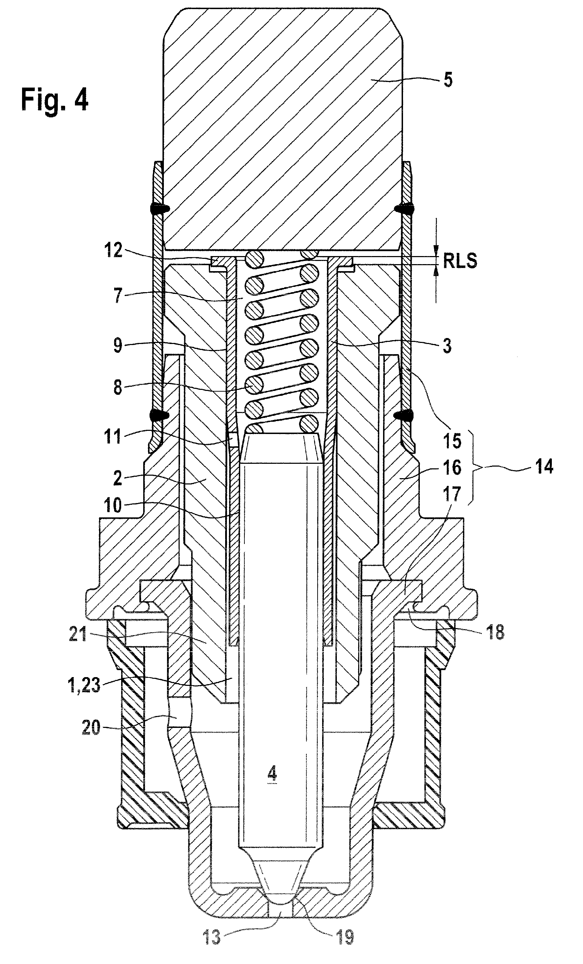

Von Figur 1 abweichend zeigen die Figuren 2 und 4 zur präzisen Führung des Magnetankers 2 sowie des Ventilstößels 4 in Richtung auf den Ventilsitz 19 eine Verlängerung des Magnetankers 2 mit mehreren Führungsrippen 21, die sich an der Innenwand des Ventilgehäuses 14 abstützen.

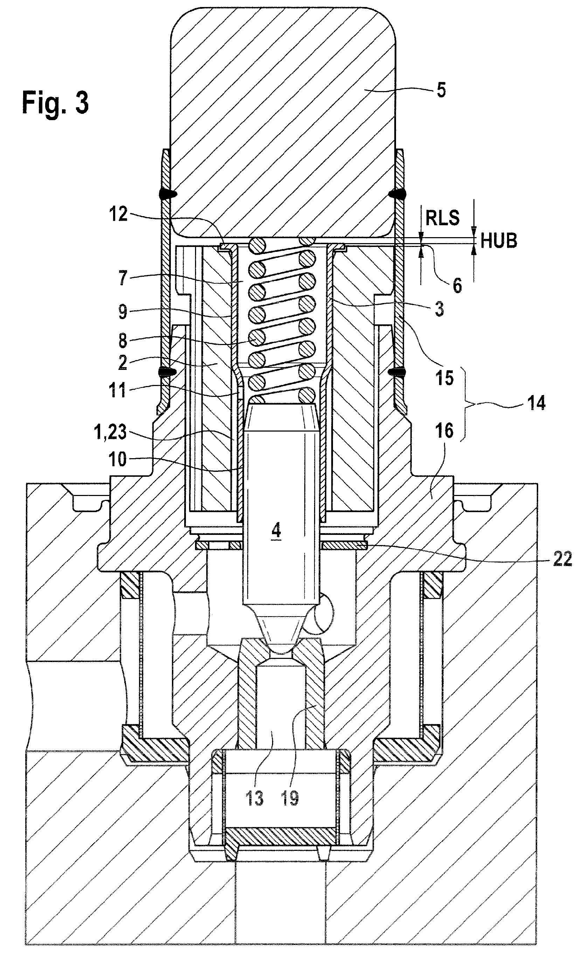

Eine weitere Abwandlung zur präzisen Führung des Magnetankers 2 mit dem Ventilstößel 4 in Richtung auf den Ventilsitz 19 geht aus der Figur 3 hervor, wonach unterhalb des Magnetankers 2 im Ventilgehäuse 14 eine nicht magnetische, mit Druckausgleichsöffnungen versehene Zentrierscheibe 22 fixiert ist, durch die sich der Ventilstößel 4 mit geringem Laufspiel hindurch erstreckt.

Bezüglich des Aufbaus der Ventilgehäuse 14 sei erwähnt, dass die in den Figuren 1 bis 3 abgebildeten Elektromagnetventilen über einen massiven Rohrkörper 16 verfügen, in dem der Ventilsitz 19 als separates Bauteil eingepresst ist. In den Figuren 1 bis 3 setzt sich das Ventilgehäuse 14 jeweils aus dem Rohrkörper 19 und der mit dem Rohrkörper 19 verschweißten Gehäusehülse 15 zusammen. Hiervon abweichend ist in der Figur 4 der Rohrkörper 16 auf der von der Gehäusehülse 15 entgegengesetzten Stirnseite mit einer weiteren dünnwandigen, topfförmigen Gehäusehülse 17 verbunden, mit der Besonderheit, dass die weitere Gehäusehülse 17 einen radial umlaufenden Bund aufweist, der in einer Ausnehmung 18 am Rohrkörper 6 mittels eines geeigneten Werkzeugs plastisch verformt fixiert ist. Die weitere Gehäusehülse 17 besteht aus einem gehärteten, ferritischen Werkstoff, um alternativ zur Darstellung in den Figuren 1 bis 3 bei Wunsch oder Bedarf den Ventilsitz 19 im Tiefziehverfahren möglichst verschleißfrei unmittelbar am Boden der topfförmigen Gehäusehülse 1 ausführen zu können. Der im Ventilsitz 19 angeordnete Ventildurchlass 13 als auch der in der Wand der weiteren Gehäusehülse 17 angeordnete Durchlass 20 lassen sich sodann gemeinsam besonders kostengünstig im Stanz- bzw. Prägeverfahren herstellen.

Anhand der vorgestellten Konstruktionsmerkmalen ergibt sich somit ein Elektromagnetventil, dessen Restluftspalt RLS mittels der in der Bohrung 1 des Magnetankers 2 eingepressten Einstellhülse 3 einfach und präzise eingestellt werden kann, indem die Einstellhülse 3 lediglich bis zum Erreichen des gewünschten Überstands 6 an der Oberseite des Magnetankers 2 verschoben wird, wobei der Überstand 6 dem Maß des Restluftspalts RLS entspricht.

Um die bei der Fertigung der Rückstellfeder 8 auftretenden Toleranzen ausgleichen zu können, erfolgt ebenso einfach und präzise eine Einstellung des für die Rückstellfeder 8 erforderlichen Einbauraums 7, indem sich die Rückstellfeder 4 auf der Stirnseite des Ventilstößels 4 abstützt, während der Ventilstößel 4 bis zum Erreichen einer definierten Federlänge kontinuierlich in dem zweiten Halteabschnitt 10 der Einstellhülse 3 verschoben wird.

### Bezugszeichenliste

- 1: Bohrung
- 2: Magnetanker
- 3: Einstellhülse
- 4: Ventilstößel
- 5: Magnetkern
- 6: Überstand
- 7: Einbauraum
- 8: Rückstellfeder
- 9: Halteabschnitt
- 10: Halteabschnitt
- 11: Druckausgleichsbohrung
- 12: Bund
- 13: Ventildurchlass
- 14: Ventilgehäuse
- 15: Gehäusehülse
- 16: Rohrkörper
- 17: Gehäusehülse
- 18: Ausnehmung
- 19: Ventilsitz
- 20: Durchlass
- 21: Führungsrippe
- 22: Zentrierscheibe
- 23: Ringraum

## Patentansprüche

1. Elektromagnetventil, insbesondere für schlupfgeregelte Kraftfahrzeug-Bremsanlagen, mit einem in einem Ventilgehäuse (14) angeordneten Ventilstößel, (4) der einen Ventildurchlass (13) im Ventilgehäuse (14) zu öffnen oder zu verschließen vermag, mit einem zur Betätigung des Ventilstößels (4) vorgesehenen Magnetanker, (2) der zur Aufnahme des Ventilstößels (4) von einer Bohrung (1) durchdrungen ist, sowie mit einer auf den Ventilstößel (4) einwirkenden Rückstellfeder, (8) deren vom Magnetanker (2) abgewandtes Federende sich an einem Magnetkern (5) im Ventilgehäuse (14) abstützt, **dadurch gekennzeichnet, dass** in der Bohrung (1) des Magnetankers (2) eine Einstellhülse (3) fixiert ist.

2. Elektromagnetventil nach Anspruch 1, **dadurch gekennzeichnet, dass** die Einstellhülse (3) an der dem Magnetkern (5) zugewandten Stirnfläche des Magnetankers (2) einen Überstand (6) aufweist, dessen axiale Erstreckung dem Maß eines zur Begrenzung des Magnetankerhubs (HUB) erforderlichen Restluftspalts (RLS) zwischen dem Magnetanker (2) und dem Magnetkern (5) entspricht.

3. Elektromagnetventil nach Anspruch 1 oder 2, **dadurch gekennzeichnet, dass** die Einstellhülse (3) mittels einer Schiebepresspassung in der Bohrung (1) des Magnetankers (2) fixiert ist.

4. Elektromagnetventil nach Anspruch 1, **dadurch gekennzeichnet, dass** der Ventilstößel (4) mittels einer Schiebepresspassung in der Einstellhülse (3) fixiert ist, wobei die Einpresstiefe des Ventilstößels (4) in der Einstellhülse (3) durch einen jeweils in der Einstellhülse (3) erforderlichen Einbauraum (7) der Rückstellfeder (8) definiert ist.

5. Elektromagnetventil nach den Ansprüchen 3 und 4, **dadurch gekennzeichnet, dass** sowohl die zwischen der Einstellhülse (3) und dem Magnetanker (2) als auch die zwischen der Einstellhülse (3) und dem Ventilstößel (4) wirksame Reibkraft in der Schiebepresspassung vom Betrag her mindestens so groß ist wie die beim Ventilschalten auf die Einstellhülse (3) und den Ventilstößel (4) einwirkenden mechanischen und hydraulischen Kräfte.

6. Elektromagnetventil nach Anspruch 1, **dadurch gekennzeichnet, dass** die Einstellhülse (3) zwei Halteabschnitte (9, 10) aufweist, wovon der erste Halteabschnitt (9) die Pressverbindung zwischen dem Außenmantel der Einstellhülse (3) und der Bohrung (1) sowie der zweite Halteabschnitt (10) die Pressverbindung zwischen dem Innenmantel der Einstellhülse (3) und dem Ventilstößel (4) umfasst.

7. Elektromagnetventil nach Anspruch 6, **dadurch gekennzeichnet, dass** im Anschluss an den ersten Halteabschnitt (9) im Bereich des zweiten Halteabschnitts (10) ein Ringraum (23) zwischen der Einstellhülse (3) und dem Magnetanker (2) vorgesehen ist.

8. Elektromagnetventil nach Anspruch 7, **dadurch gekennzeichnet, dass** die Einstellhülse (3) im Übergangsbereich vom zweiten Halteabschnitt (10) zum ersten Halteabschnitt (9) von einer Druckausgleichsbohrung (11) durchdrungen ist, die den Ringraum (23) mit einem die Rückstellfeder (8) in der Einstellhülse (3) aufnehmenden Einbauraum (7) hydraulisch verbindet.

9. Elektromagnetventil nach Anspruch 1, **dadurch gekennzeichnet, dass** die Einstellhülse (3) zumindest an einem Hülsenende mit einem Bund (12) versehen ist, der entweder als Axialanschlag am Magnetkern (5) oder als Ankerzentrierhilfe im Bereich zwischen dem Magnetanker (2) und dem Ventildurchlass (13) an der Innenwand des Ventilgehäuses (14) geführt ist.

10. Elektromagnetventil nach Anspruch 1, **dadurch gekennzeichnet, dass** die Einstellhülse (3) aus einem den Magnetfluss nicht leitenden Werkstoff, insbesondere einem austentischen Stahl hergestellt ist.

## Claims

1. Electromagnetic valve, in particular for slip-controlled motor vehicle brake systems, having a valve tappet (4), which is arranged in a valve housing (14) and which can open or close a valve passage (13) in the valve housing (14), a magnet armature (2), which is provided in order to actuate the valve tappet (4) and is penetrated by a hole (1) in order to accommodate the valve tappet (4), and a return spring (8), which acts on the valve tappet (4) and the spring end of which facing away from the magnet armature (2) is supported on a magnet core (5) in the valve housing (14), **characterized in that** an adjustment sleeve (3) is fixed in the hole (1) in the magnet armature (2).

2. Electromagnetic valve according to Claim 1, **characterized in that**, at the end face of the magnet armature (2) facing the magnet core (5), the adjustment sleeve (3) has an overhang (6), the axial extent of which corresponds to the dimension of a residual air gap (RLS) between the magnet armature (2) and the magnet core (5), said gap being required to limit the magnet armature stroke (HUB).

3. Electromagnetic valve according to Claim 1 or 2, **characterized in that** the adjustment sleeve (3) is fixed in the hole (1) in the magnet armature (2) by means of a sliding interference fit.

4. Electromagnetic valve according to Claim 1, **characterized in that** the valve tappet (4) is fixed in the adjustment sleeve (3) by means of a sliding interference fit, wherein the depth to which the valve tappet (4) is pressed into the adjustment sleeve (3) is defined by a respective installation space (7) required for the return spring (8) in the adjustment sleeve (3).

5. Electromagnetic valve according to Claims 3 and 4, **characterized in that** both the frictional force acting in the sliding interference fit between the adjustment sleeve (3) and the magnet armature (2) and that acting in the sliding interference fit between the adjustment sleeve (3) and the valve tappet (4) are at least equal in magnitude to the mechanical and hydraulic forces acting on the adjustment sleeve (3) and the valve tappet (4) during valve switching.

6. Electromagnetic valve according to Claim 1, **characterized in that** the adjustment sleeve (3) has two holding sections (9, 10), of which the first holding section (9) includes the interference joint between the outer circumference of the adjustment sleeve (3) and the hole (1), and the second holding section (10) includes the interference joint between the inner circumference of the adjustment sleeve (3) and the valve tappet (4).

7. Electromagnetic valve according to Claim 6, **characterized in that** an annular space (23) is provided between the adjustment sleeve (3) and the magnet armature (2), adjoining the first holding section (9), in the region of the second holding section (10).

8. Electromagnetic valve according to Claim 7, **characterized in that** the adjustment sleeve (3) is penetrated in the region of transition from the second holding section (10) to the first holding section (9) by a pressure-equalizing hole (11), which connects the annular space (23) hydraulically to an installation space (7) accommodating the return spring (8) in the adjustment sleeve (3).

9. Electromagnetic valve according to Claim 1, **characterized in that** the adjustment sleeve (3) is provided at least at one sleeve end with a collar (12) which is guided either as an axial stop on the magnet core (5) or as an armature-centering aid on the inner wall of the valve housing (14) in the region between the magnet armature (2) and the valve passage (13).

10. Electromagnetic valve according to Claim 1, **characterized in that** the adjustment sleeve (3) is produced from a material which does not conduct the magnetic flux, in particular an austenitic steel.

## Revendications

1. Soupape électromagnétique, en particulier pour installations de freinage de véhicules automobiles à régulation du patinage, comprenant un poussoir de soupape 4 disposé dans un boîtier de soupape (14), qui permet d'ouvrir ou de fermer un passage de soupape (13) dans le boîtier de soupape (14), avec un induit magnétique (2) prévu pour actionner le poussoir de soupape (4), à travers lequel est réalisé un alésage (1) pour recevoir le poussoir de soupape (4), et comprenant un ressort de rappel (8) agissant sur le poussoir de soupape (4), dont l'extrémité de ressort opposée à l'induit magnétique (2) s'appuie contre un noyau magnétique (5) dans le boîtier de soupape (14), **caractérisée en ce qu'**une douille d'ajustement (3) est fixée dans l'alésage (1) de l'induit magnétique (2).

2. Soupape électromagnétique selon la revendication 1, **caractérisée en ce que** la douille d'ajustement (3) présente sur la surface frontale de l'induit magnétique (2) tournée vers le noyau magnétique (5) un dépassement (6) dont l'étendue axiale correspond à la dimension d'un entrefer résiduel (RLS) entre l'induit magnétique (2) et le noyau magnétique (5), nécessaire pour la limitation de la course de l'induit magnétique (HUB).

3. Soupape électromagnétique selon la revendication 1 ou 2, **caractérisée en ce que** la douille d'ajustement (3) est fixée au moyen d'un ajustement serré coulissant dans l'alésage (1) de l'induit magnétique (2).

4. Soupape électromagnétique selon la revendication 1, **caractérisée en ce que** le poussoir de soupape (4) est fixé dans la douille d'ajustement (3) au moyen d'un ajustement serré coulissant, la profondeur d'enfoncement du poussoir de soupape (4) dans la douille d'ajustement (3) étant définie par un espace d'installation (7) du ressort de rappel (8) requis à chaque fois dans la douille d'ajustement (3).

5. Soupape électromagnétique selon les revendications 3 et 4, **caractérisée en ce que** dans l'ajustement serré coulissant, à la fois la force de frottement entre la douille d'ajustement (3) et l'induit magnétique (2) et la force de frottement agissant entre la douille d'ajustement (3) et le poussoir de soupape (4) sont au moins aussi importantes, en valeur absolue, que les forces mécaniques hydrauliques agissant lors de la commutation de la soupape sur la douille d'ajustement (3) et le poussoir de soupape (4).

6. Soupape électromagnétique selon la revendication 1, **caractérisée en ce que** la douille d'ajustement (3) présente deux portions de retenue (9, 10), dont la première portion de retenue (9) comprend la connexion par pressage entre l'enveloppe extérieure de la douille d'ajustement (3) et l'alésage (1) et la deuxième portion de retenue (10) comprend la connexion par pressage entre l'enveloppe interne de la douille d'ajustement (3) et le poussoir de soupape (4).

7. Soupape électromagnétique selon la revendication 6, **caractérisée en ce qu'**un espace annulaire (23) est prévu à la suite de la première portion de retenue (9) dans la région de la deuxième portion de retenue (10) entre la douille d'ajustement (3) et l'induit magnétique (2).

8. Soupape électromagnétique selon la revendication 7, **caractérisée en ce que** la douille d'ajustement (3), dans la région de transition de la deuxième portion de retenue (10) à la première portion de retenue (9), est traversée par un alésage d'équilibrage de pression (11) qui relie hydrauliquement l'espace annulaire (23) à un espace d'installation (7) recevant le ressort de rappel (8) dans la douille d'ajustement (3).

9. Soupape électromagnétique selon la revendication 1, **caractérisée en ce que** la douille d'ajustement (3), au moins au niveau d'une extrémité de douille, est pourvue d'un épaulement (12) qui est guidé soit en tant que butée axiale contre le noyau magnétique (5), soit en tant qu'auxiliaire de centrage d'induit, dans la région entre l'induit magnétique (2) et le passage de soupape (13), contre la paroi interne du boîtier de soupape (14).

10. Soupape électromagnétique selon la revendication 1, **caractérisée en ce que** la douille d'ajustement (3) est fabriquée en un matériau non conducteur du flux magnétique, en particulier en acier austénitique.
